**Europäisches Patentamt**

**European Patent Office**

**Office européen des brevets**

(19)

(11) Veröffentlichungsnummer : **0 033 074**
**B1**

(12) # EUROPÄISCHE PATENTSCHRIFT

(45) Veröffentlichungstag der Patentschrift :
25.07.84

(21) Anmeldenummer : **81100128.8**

(22) Anmeldetag : **09.01.81**

(51) Int. Cl.³ : **G 21 C 17/06**

(54) **Reparaturvorrichtung für Brennelemente von Siedewasserkernreaktoren.**

(30) Priorität : **21.01.80 DE 3002003**

(43) Veröffentlichungstag der Anmeldung :
**05.08.81 Patentblatt 81/31**

(45) Bekanntmachung des Hinweises auf die Patenterteilung : **25.07.84 Patentblatt 84/30**

(84) Benannte Vertragsstaaten :
**CH DE IT LI SE**

(56) Entgegenhaltungen :
DE-A- 1 960 212
FR-A- 1 537 438
FR-A- 1 540 550
FR-A- 2 003 171
FR-A- 2 360 963
FR-A- 2 395 571
LU-A-   63 173
US-A- 3 929 570
US-A- 3 983 632
KERNTECHNIK, 19, 1977, Nr. 3 München, DE B.J. SELIG "Serviceleistungen auf dem Gebiet der Inspektion Kerntechnischer Anlagen", Seiten 110-116
KERNTECHNIK, 19, 1977, no. 3 München, DE H. KNAAB et al. "KWU-Brennelement-Service", Seiten 122-129

(73) Patentinhaber : **KRAFTWERK UNION AKTIENGE-SELLSCHAFT**
**Wiesenstrasse 35**
**D-4330 Mülheim (Ruhr) (DE)**

(72) Erfinder : **Knecht, Klaus**
**Lachnerstrasse 40**
**D-8520 Erlangen (DE)**
Erfinder : **Kraus, Kurt**
**Marienbader Strasse 1**
**D-8552 Höchstadt (DE)**

(74) Vertreter : **Mehl, Ernst, Dipl.-Ing. et al**
**Postfach 22 01 76**
**D-8000 München 22 (DE)**

## Beschreibung

Die vorliegende Erfindung betrifft eine Reparaturvorrichtung zum fernbedienten, unter Wasser auszuführenden Brennstabwechsel sowie zur Prüfung aus Brennelementen von Siedewasserreaktoren entnommener Brennstäbe, in Verbindung mit einer üblichen Kastenabstreifmaschine. Brennelemente von Kernreaktoren bestehen im allgemeinen aus einer Vielzahl parallel angeordneter einzelner Brennstäbe, die durch Abstandshaltergitter auf gegenseitigem Sollabstand gehalten sind. Ein Defekt in einem Brennelement liegt dabei dann vor, wenn das Hüllrohr eines Brennstabes beschädigt ist, so daß radioaktive Spaltprodukte in das umgebende Kühlwasser austreten können. Jedes Kernkraftwerk ist mit einer Reinigungsanlage für das Kühlwasser ausgerüstet, deren Kapazität so groß ist, daß durchaus eine Anzahl von Brennstäben eines Reaktorkernes defekt sein können, ohne daß sofort der Kernreaktor abgeschaltet werden müßte. Um die Kontamination des Primärkreises einer Anlage und damit die Strahlenbelastung des Betriebspersonals bei Revisionsarbeiten so gering wie möglich zu halten, ist es jedoch zweckmäßig, Brennelemente mit defekten Brennstäben zu reparieren. Diese Reparaturarbeiten bestehen darin, zunächst die defekten Brennelemente aufzuspüren und sodann die darin beschädigten Brennstäbe zu ermitteln und gegen andere auszutauschen. Diese Arbeiten müssen wegen der außerordentlich starken Strahlung der Brennelemente unter Wasser, also beispielsweise im Brennelementlagerbecken der betreffenden Kernkraftwerksanlage durchgeführt werden. Dazu ist es notwendig, daß die einzelnen Brennstäbe des Brennelementes zugänglich gemacht werden, wozu zunächst die bei Siedewasserbrennelementen übliche Kastenabstreifmaschine Verwendung finden kann. Die Brennelementkästen stellen eine etwa quadratische Ummantelung des Brennelementes zum Zwecke der Kühlmittel- sowie Steuerelementführung dar und können mehrfach wieder Verwendung finden. Sie sind an der oberen Gitterplatte des Brennelementes, die einen Teil des Brennelementskelettes darstellt, mit Schrauben befestigt und können mit Hilfe einfacher fernbedienter Werkzeuge leicht nach oben vom Brennelement abgezogen werden. Sie werden dabei auf einer seitlichen Position der sogenannten Kastenabstreifmaschine abgestellt und für den Wiedereinsatz bereitgehalten. Diese Maschine ist am Rande des Brennelementbeckens angeordnet, wird von einer Arbeitsbühne aus bedient und kann in verschiedene Höhenlagen des Brennelementlagerbeckens verfahren werden, je nachdem welche Arbeiten auszuführen sind.

Das erwähnte Brennelementskelett besteht aus einer oberen Gitterplatte und einer unteren Gitterplatte, die mit einzelnen Brennstäben des Elementes verschraubt sind, die übrigen Brennstäbe sind in diesen Platten geführt. Durch die in verschiedenen Höhenlagen angeordneten Abstandshaltergitter werden alle Brennstäbe in einem gesicherten Abstand gehalten.

Da für das Auswechseln einzelner Brennstäbe dieser Verband gelöst werden muß, stellte sich die Aufgabe, dafür eine Vorrichtung vorzusehen, die den Zusammenhalt des Brennelementes, insbesondere die Geometrie der einzelnen Brennstäbe zueinander gewährleistet.

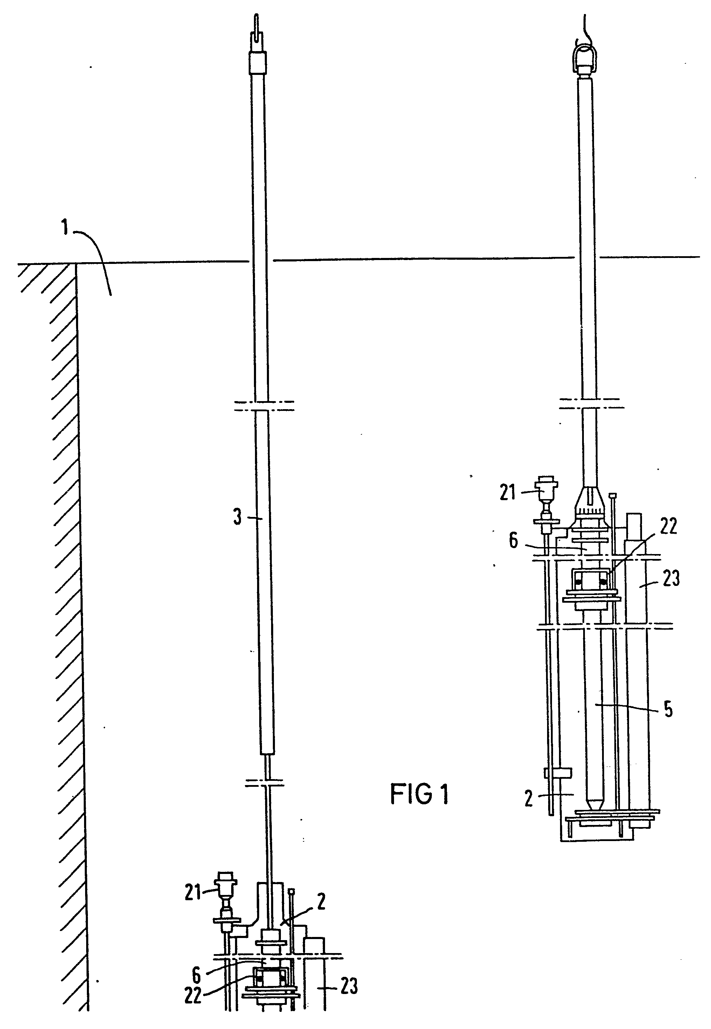

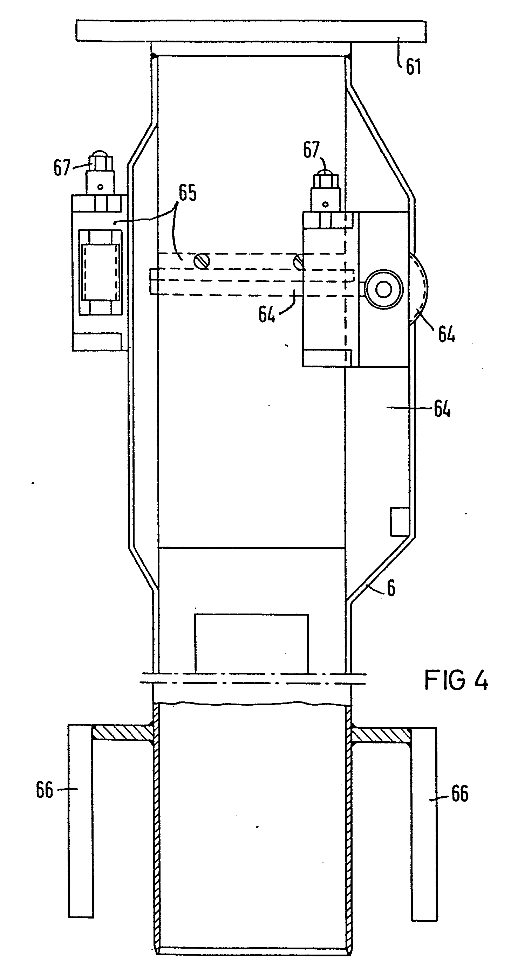

Diese Aufgabe wurde erfindungsgemäß durch eine Reparaturvorrichtung gelöst, die aus einem nach Abzug des Brennelementkastens auf das Brennelement aufsetzbaren Führungskasten mit Zentriereinrichtungen für die Brennstäbe, einer mit diesem verbindbaren Indikatorplatte zur Vermessung der Brennstablängen sowie einer Zentrierplatte für die Ankoppelung einer an sich bekannten Brennstabwechseleinrichtung besteht. Ein mögliches Ausführungsbeispiel für eine derartige Vorrichtung ist in den Figuren 1 bis 13 näher dargestellt und wird nachstehend zur Erläuterung dieser Erfindung im einzelnen beschrieben.

Die Fig. 1 zeigt die bereits erwähnte Anordnung der Kastenabstreifmaschine 2 im Lagerbecken 1 einer Kernreaktoranlage. Die linke Kastenabstreifmaschine ist dabei tiefer im Lagerbecken abgesenkt, sie zeigt ihre Zuordnung mit einer Brennstabwechselvorrichtung 3. Die auf der rechten Seite dargestellte Kastenabstreifmaschine 2 hat eine höhere Position, in dieser Lage wird beispielsweise die obere Gitterplatte des Brennelementes demontiert und der Führungskasten 6 aufgesetzt, die Länge der einzelnen Brennstäbe 51 gemessen und auch wieder der Zusammenbau des Brennelementskelettes durchgeführt. Für das Aufsetzen des Brennelementkastens, wie für den eigentlichen Wechsel der Brennstäbe, wird die Kastenabstreifmaschine 2 wieder in ihre untere Position verfahren, da über den zu hantierenden Bauelementen zur Sicherstellung der Strahlungsabschirmung wenigstens eine Wasserschicht von 3 m verbleiben muß. In dieser Figur ist außerdem an der Kastenabstreifmaschine noch eine sogenannte Inspektionsposition 21 angedeutet, in der mit Hilfe einer verfahrbaren Fernsehkamera eine optische Inspektion der entnommenen Brennstäbe durchführbar ist. Die Halterung der Brennelemente geschieht dabei auf dieser Kastenabstreifmaschine 2 durch der Form angepaßte, hier nicht näher dargestellte Elemente, mit denen auch ein Wegkippen verhindert wird. Diese Elemente sind zur Verminderung der Reibung noch mit Führungsrollen versehen, durch die gleichzeitig eine Beschädigung der abzuziehenden Brennelementkästen 23 vermieden wird.

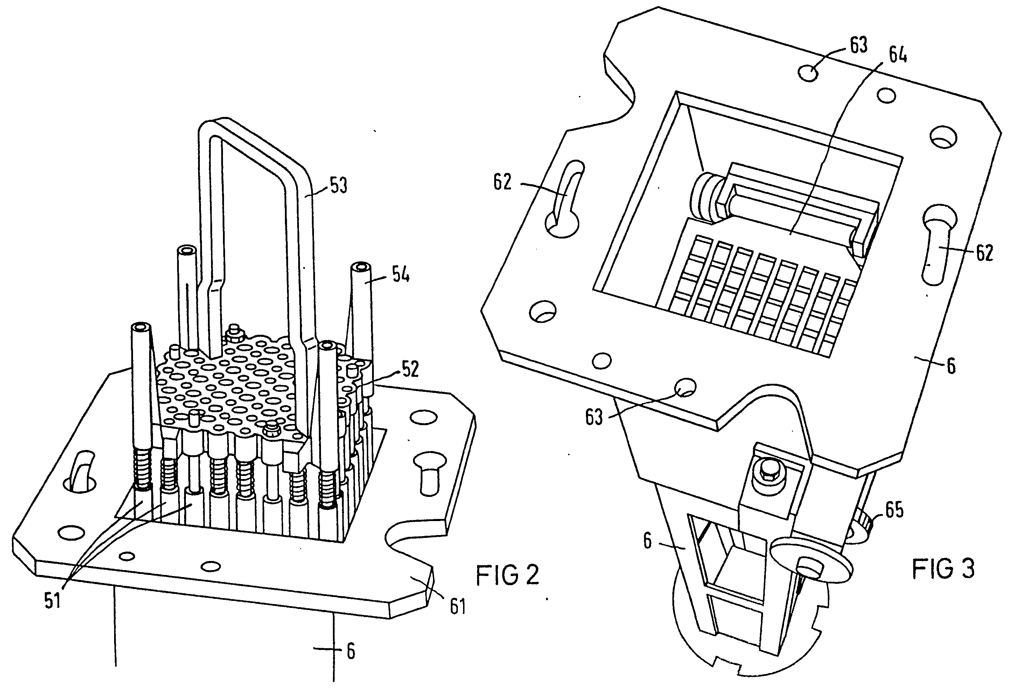

Die Fig. 2 zeigt nun das Oberteil eines Brennelementes mit bereits abgezogenem Brennelementkasten. Die einzelnen Brennstäbe sind mit 51 bezeichnet und in der oberen Gitterplatte 52 gleitend gelagert. Desgleichen auch in der unteren Gitterplatte, die hier nicht dargestellt ist. Acht Brennstäbe 51 sind mit einem Gewindebolzen verlängert, ragen in der dargestellten Weise durch die obere Gitterplatte 52 hindurch und sind dort verschraubt. Für die Handhabung des gesamten Brennelementes ist das Griffstück 53 vorgesehen, das einstückig mit der oberen Gitterplatte 52 verbunden ist. Die ebenfalls vorgesehenen Bolzen 54 mit Innengewinde dienen der Befestigung des Brennelementkastens 23. In dieser perspektivischen Darstellung ist weiterhin bereits der aufgesetzte Führungskasten 6 mit seiner oberen Stirnplatte 61 zu sehen.

Die ebenfalls perspektivische Darstellung in Fig. 3 zeigt eine Draufsicht auf diesen Führungskasten, ohne das umfaßte Brennelement, die Fig. 4 eine Seitenansicht derselben, die Fig. 5 einen Querschnitt in Höhe der Halterungskämme 64 und 65 für die Brennstäbe und die Fig. 6 eine Seitenansicht eines Brennelementes 5 ohne Kasten mit aufgesetztem Führungskasten 6.

Dieser Führungskasten 6 hat zunächst den inneren Querschnitt des abgenommenen Brennelementkastens 23 und zentriert sich an den Abstandshaltern 55, in gleicher Weise wie der abgenommene Brennelementkasten 23. An seinem unteren Ende ist der Führungskasten 6 mit einer Gabel 66 versehen, die auf den Führungsrollen 22 der Kastenabstreifmaschine 2 aufsitzen. Auf diese Weise ist stets eine genaue Höhenposition dieses Führungskastens gegeben.

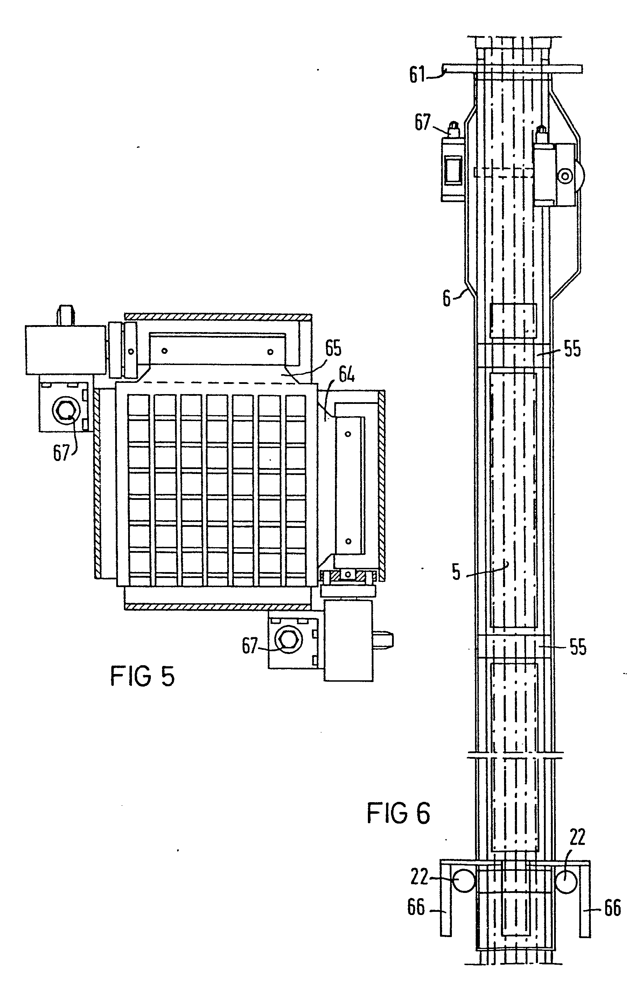

Er ist weiterhin mit zwei um 90° versetzten schwenkbaren Kammstücken 64 und 65 versehen, die, wie Fig. 5 und Fig. 3 zeigen, im eingeschwenkten Zustand ein Gitter bilden, durch dessen Maschen die Brennstäbe, ähnlich wie bei einem Abstandshaltergitter geführt sind. Diese Führung ist jetzt aber oberhalb dicht unter der oberen Gitterplatte 52 vorgesehen. Über ein Schneckengetriebe wird die Schwenkbewegung dieser Kämme durch ein an der Fassung 67 eingreifendes Drehwerkzeug bewerkstelligt. Nachdem die Kämme eingefahren sind, kann durch Lösen der Brennstabbefestigungsmuttern, siehe Fig. 2, die obere Gitterplatte 52 abgenommen werden, so daß damit die Brennstabenden frei zugänglich sind.

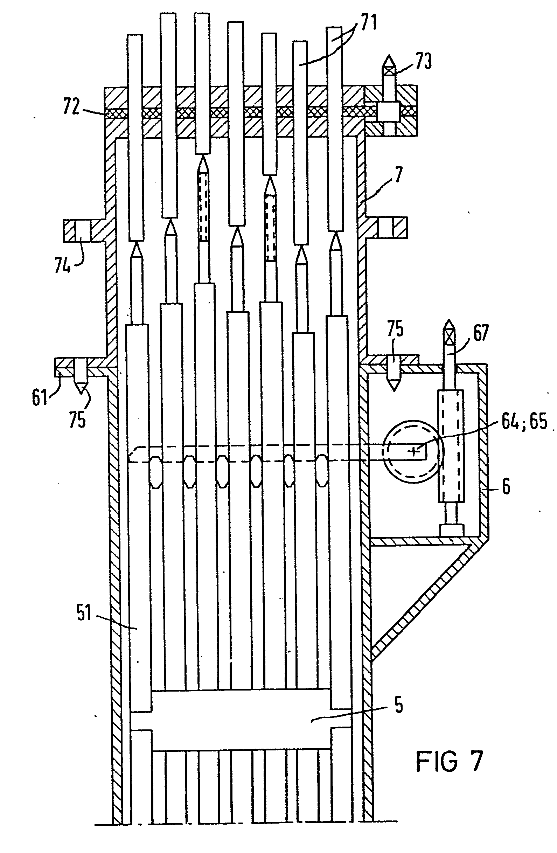

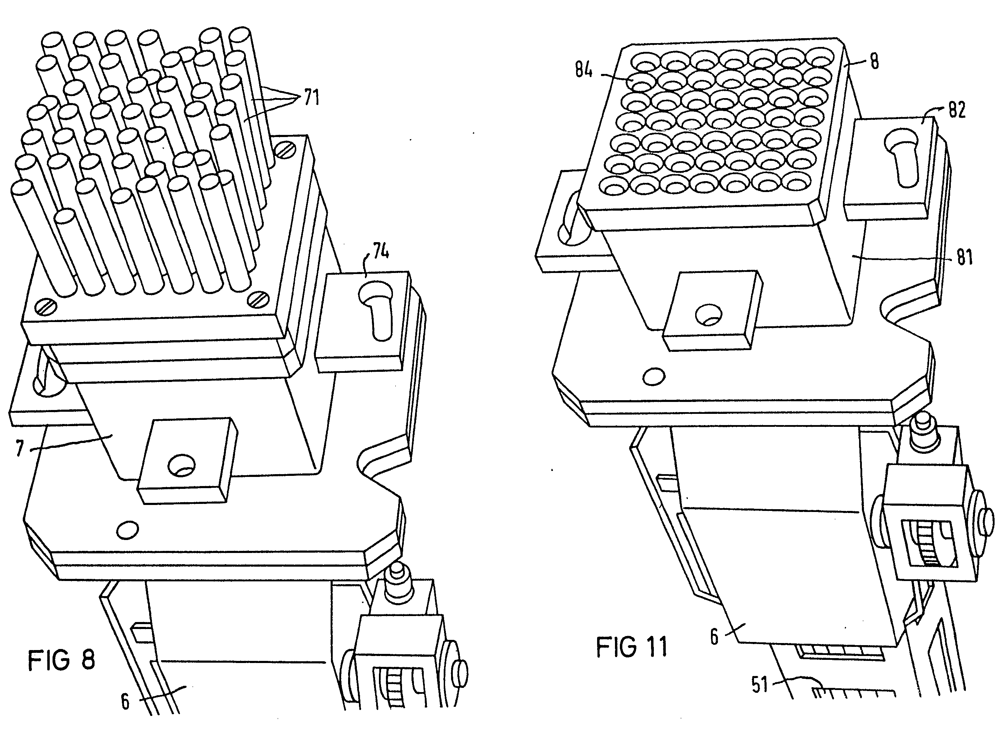

Damit ist das Brennelement soweit vorbereitet, daß Reparaturen oder Brennstabwechsel vorgenommen werden können. In Fig. 7 ist im Längsschnitt der Aufsatz einer Indikatorplatte 7 dargestellt, desgleichen Fig. 8 in perspektivischer Ansicht. Mit Hilfe dieser Indikatorplatte, die über Paßstifte 75 auf der Stirnplatte 61 des Führungskastens 6 aufgesetzt ist, kann zunächst das Wachstum der einzelnen Brennstäbe untersucht werden. Diesem Zwecke dienen Indikatorstifte 71, die in einer Klemmplatte mit Federn 72 über den einzelnen Brennstabpositionen geführt sind. In der in Fig. 7 dargestellten Weise verschieben sich die Indikatorstifte 71 je nach Länge der Brennstäbe 51, so daß nach Abnahme der Indikatorplatte 7 die genaue Länge bzw. die Verlängerung dieser Brennstäbe aus der Stellung der Indikatorstifte 71 abgelesen werden kann. Damit keine Verschiebung dieser Stifte 71 während des Abnahmevorganges und damit eine Verfälschung der Meßergebnisse stattfinden kann, ist ein sogenannter Feststeller 73 vorgesehen, der über ein fernbedientes Werkzeug betätigt werden kann. Zur Handhabung dieser Indikatorplatte 7 sind an derselben seitliche Laschen 74 mit Eingriffsbohrungen für das Haltewerkzeug angebracht.

Aus den mit diesem Hilfsgerät festgestellten Längenänderungen der einzelnen Brennstäbe kann man errechnen, ob ein Brennstab durch unterschiedliches Wachstum aller Brennstäbe aus der oberen Gitterplatte ausgefädelt war, oder ob ein Brennstab bereits auf Block gewachsen war. Außerdem kann aus den mit der Indikatorplatte gewonnenen Meßwerten der neu einzustellende Abstand zwischen den Brennstabschultern und der oberen Gitterplatte errechnet werden. Dieser Abstand ist so zu optimieren, daß kein Brennstab ausgefädelt und möglichst wenig Brennstäbe auf Block sitzen, wobei zusätzlich die Gesamtkraft aller Federn so groß sein muß, daß ein aufgesetzter Brennelementkasten durch sein Eigengewicht die obere Gitterplatte nicht auf die Stabschultern drückt. Die bereits eingangs angesprochene Inspektion durch visuelle Mittel, wie z. B. eine verfahrbare Fernsehkamera, können außerdem defekte Brennstäbe festgestellt werden.

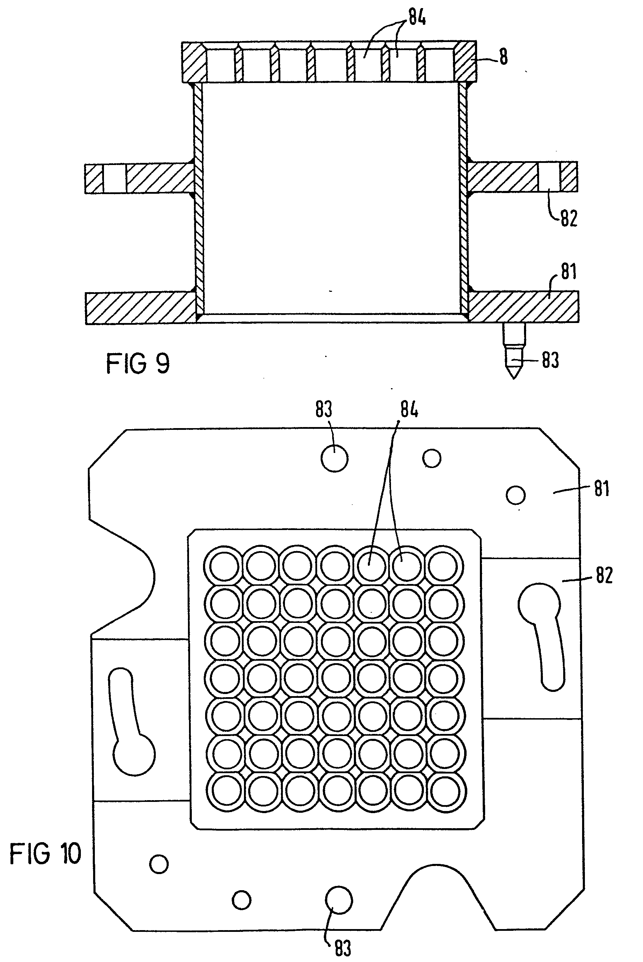

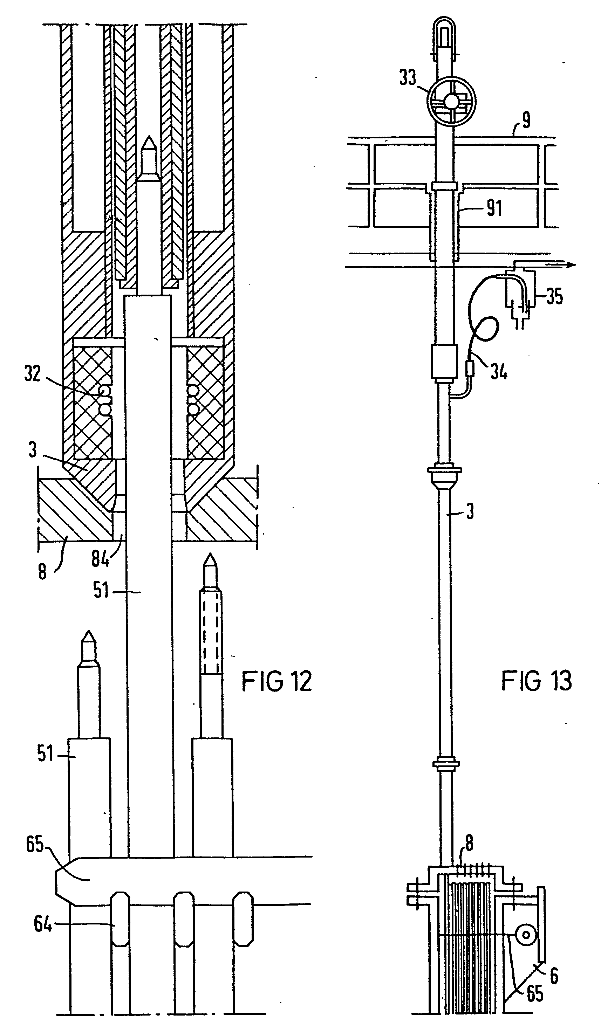

Da es schwierig wäre, die auszuwechselnden Brennstäbe mit der Brennstabwechselvorrichtung durch die große Wassertiefe des Lagerbeckens hindurch ohne Beschädigung evtl. benachbarter Brennstäbe zu erfassen, ist für diesen Vorgang ebenfalls ein spezielles Hilfsmittel, nämlich eine Zentrierplatte, siehe Fig. 9 bis 11 vorgesehen. Diese wird ebenfalls über Paßstifte 83 auf den Führungskasten 6 aufgesetzt, ähnlich wie die Indikatorplatte ist sie mit seitlichen Laschen 82 mit entsprechenden Bohrungen für den Eingriff eines Handhabungswerkzeuges versehen. Diese Zentrierplatte 8 ist außerdem mit einem Kragen 81, an dem die Laschen 82 befestigt sind, versehen, der das Gewicht der später auflastenden Brennstabwechselvorrichtung 3 auf den Führungskasten 6 überleitet. Für den zielgerechten Einsatz dieser Brennstabwechselvorrichtung 3 ist diese Zentrierplatte mit Zentrierbohrungen 84 jeweils oberhalb der Brennstabposition ausgerüstet, die nach oben zur besseren Einführung des Werkzeuges der Vorrichtung 3 konisch erweitert sind, siehe insbesondere auch Fig. 12 In dieser ist die Brennstabwechselvorrichtung 3 im aufgesetzten Zustand auf die Zentrierplatte 8 gezeigt, wobei durch die Wechselvorrichtung bereits ein Brennstab 51 gefaßt und aus dem Brennelementverband teilweise herausgezogen ist. In dieser an sich bekannten Brennstabwechselvorrichtung, siehe DE-A-26 35 501 ist eine Wirbelstromsonde 32 vorgesehen, mit deren Hilfe während des Entnahmevorganges der Brennstab bzw. dessen Hüllrohr auf Schäden untersucht werden kann.

Die Fig. 13 zeigt diese Brennstabwechselvorrichtung 3 schematisch in ihrer ganzen Länge im auf den Führungskasten 6 aufgesetzten Zustand. Am oberen Ende dieser Wechselvorrichtung 3 ist eine Einrichtung 33 für Betätigung der Spannzangen zum Fassen des Brennstabendes sowie zur Hubbetätigung dargestellt. Die Bedienung erfolgt von der Arbeitsbühne 9 aus, mit der auch die Transporteinrichtung 91 zur Verschiebung in den beiden Koordinatenachsen befestigt ist. Während des Wechselvorganges wird der gezogene Brennstab ständig mit Beckenwasser gespült, das am oberen Ende über die Leitung 34 austritt und über einen Gasabscheider 35 in das Abklingbecken zurückgeleitet wird. Neben der Wirbelstromsonde gibt auch dieser Gasabscheider 35 die Möglichkeit aus der Abluft auf evtl. Brennstabschäden zu schließen.

Da aus Abschirmungsgründen über dem Brennelement bzw. dessen Teilen stets eine Wasserschicht von wenigstens 3 m Dicke vorhanden sein muß, wird vor dem Brennstabwechselvorgang die Kastenabstreifmaschine 2 soweit abgesenkt, daß diese Wasserdicke auch noch bei gezogenem Brennstab sichergestellt ist. Dieser gezogene Brennstab wird anschließend in einem Köcher auf der Kastenabstreifmaschine 2 abgestellt und aus einem Köcher mit intakten Brennstäben der Ersatzstab entnommen und wieder eingesetzt. Es sei an dieser Stelle auch darauf hingewiesen, daß die Konstruktion dieser Brennstabwechselvorrichtung 3 so gehalten ist, daß ein Ausknicken der Brennstäbe, insbesondere beim Einführen in den Brennelementverband mit Sicherheit verhindert wird.

Dieses hier anhand der Figuren beschriebene Ausführungsbeispiel kann selbstverständlich auch entsprechend der bereits vorhandenen Einrichtungen abgewandelt werden, so insbesondere hinsichtlich der Anpassung auf die jeweilige Anzahl der Brennstäbe im Brennelement sowie die Lage der Abstandshaltergitter zur Zentrierung des Führungskastens 6 und die Ausbildung der Kastenabstreifmaschine im Hinblick auf die dort möglichen Abstützungsverhältnisse. Das grundlegende Element des Führungskastens 6 bietet außerdem die Möglichkeit des Einsatzes weiterer Hilfswerkzeuge, wie z. B. Einrichtungen zur Erfassung von Brennstabdefekten, die in bekannter Weise über die Brennstabenden steckbar sind und mit Hilfe von Temperatur und Ultraschallmeßtechnik das Vorhandensein von Wasser im Inneren des Brennstabes zu erfassen gestatten.

**Ansprüche**

1. Reparaturvorrichtung zum fernbedienten, unter Wasser auszuführenden Brennstabwechsel sowie zur Prüfung aus Brennelementen von Siedewasserreaktoren entnommener Brennstäbe, in Verbindung mit einer üblichen Kastenabstreifmaschine, dadurch gekennzeichnet, daß die Vorrichtung aus einem nach Abzug des Brennelementkastens auf das Brennelement aufsetzbaren Führungskasten mit Zentriereinrichtungen für die Brennstäbe, einer mit diesem verbindbaren Indikatorplatte zur Vermessung der Brennstablägen sowie einer Zentrierplatte für die Ankoppelung einer an sich bekannten Brennstabwechselvorrichtung besteht.

2. Vorrichtung nach Anspruch 1, dadurch gekennzeichnet, daß der Führungskasten mit Abstützeinrichtungen gegenüber der Kastenabstreifmaschine und Abstandshaltern des Brennelementes, zur Zentrierung der Brennstäbe mit zweiseitig um eine horizontale Achse in die Brennstabzwischenräume einschwenkbaren Kämmen sowie Bohrungen für die Paßstifte einer wahlweise aufsetzbaren Indikatorplatte als auch einer Zentrierplatte für die Brennelementwechselvorrichtung versehen ist.

3. Vorrichtung nach Anspruch 1, dadurch gekennzeichnet, daß die Indikatorplatte mit über den Brennstabpositionen durch Anschlag an den Brennstäben verstellbaren und in dieser Lage arretierbaren Stiften zur Ermittlung der evtl. unterschiedlichen Brennstablängen versehen ist.

4. Vorrichtung nach Anspruch 1, dadurch gekennzeichnet, daß die Zentrierplatte mit über den Brennstabpositionen angeordneten konischen Bohrungen versehen ist und einen Kragen von der Querschnittsform des Brennelementkastens besitzt, der zur Übertragung der Belastung durch die Brennstabwechselvorrichtung auf den Führungskasten ausgebildet und mit Paßstiften zur Sicherstellung der Sollage der konischen Bohrungen versehen ist.

**Claims**

1. Repair apparatus for the remote-controlled under-water exchange of a fuel rod, and for testing fuel rods which have been removed from fuel elements of boiling water reactors, in combination with a conventional box stripping machine, characterised in that the apparatus consists of a guide box which can be placed on the fuel element after removal of the fuel element box and which has centering devices for the fuel rods, an indicator plate which can be connected to said guide box and serves to measure the fuel rod lengths, and a centering plate for coupling a known fuel rod changing device.

2. Apparatus according to Claim 1, characterised in that the guide box is provided with supporting devices opposite to the box stripping machine and to spacers of the fuel element, for centering the fuel rods, with combs, which can be pivoted on either side about a horizontal axis into the gaps between the fuel rods, and with bores for the fitting pins of an indicator plate and a centering plate for the fuel element changing device, which are alternatively attachable.

3. Apparatus according to Claim 1, characterised in that the indicator plate is provided with pins which are adjustable above the fuel rod positions by impact with the fuel rods and which can be secured in this position, and serve to determine the possibly different fuel rod lengths.

4. Apparatus according to Claim 1, characterised in that the centering plate is provided with conical bores arranged above the fuel rod positions and has a collar of the cross-sectional shape of the fuel element box which, in order to transmit the load through the fuel rod changing device, is formed on the guide box and is provided with fitting pins for the securing of the theoretical position of the conical bores.

**Revendications**

1. Installation de réparation pour le remplacement télécommandé et s'effectuant sous l'eau de crayons combustibles, ainsi que pour la vérification de crayons combustibles prélevés d'assemblages combustibles de réacteurs à eau bouillante, en liaison avec une machine habituelle d'enlèvement de boîtiers-canaux, caractérisée en ce que l'installation est constituée d'un boîtier de guidage, qui peut être mis sur l'assemblage combustible après enlèvement du boîtier-canal de celui-ci et qui a des dispositifs de centrage pour les crayons combustibles, d'une plaque indicatrice pouvant être reliée au boîtier de guidage et destinée à la mesure des longueurs des crayons combustibles, ainsi que d'une plaque de centrage pour le couplage d'un dispositif connu en soi de remplacement de crayons combustibles.

2. Installation selon la revendication 1, caractérisée en ce que le boîtier de guidage est muni de dispositifs d'appui sur la machine d'enlèvement de boîtiers-canaux et d'éléments de maintien de l'assemblage combustible, pour le centrage des crayons combustibles, ayant des peignes montés pivotant des deux côtés autour d'un axe horizontal de manière à pouvoir pénétrer dans les intervalles entre les crayons combustibles, ainsi que des perçages tant pour les goujons d'assemblage d'une plaque indicatrice pouvant être montée éventuellement que d'une plaque de centrage pour le dispositif de remplacement de l'assemblage combustible.

3. Installation selon la revendication 1, caractérisée en ce que la plaque indicatrice est munie de broches qui sont destinées à la détermination des différences éventuelles de longueur des crayons combustibles, qui peuvent être réglées au-dessus des emplacements des crayons combustibles par venue en butée sur ceux-ci et qui peuvent être bloquées en cette position.

4. Installation selon la revendication 1, caractérisée en ce que la plaque de centrage est munie de perçages coniques disposés au-dessus des emplacements des crayons combustibles et possède un collet, qui a la forme de la section transversale du boîtier-canal, qui est agencé pour transmettre la charge au boîtier de guidage par l'intermédiaire du dispositif de remplacement de crayons combustibles et qui est muni de goujons d'assemblage destinés à s'assurer de la position que doivent prendre les perçages coniques.

FIG 1

FIG 3

FIG 2

2

FIG 4

FIG 5

FIG 6

FIG 7

FIG 8

FIG 11

0 033 074

FIG 9

FIG 10

FIG 12

FIG 13